**Europäisches Patentamt**

**European Patent Office**

**Office européen des brevets**

Veröffentlichungsnummer: **0 275 831**
**A1**

## EUROPÄISCHE PATENTANMELDUNG

Anmeldenummer: **87810762.2**

Anmeldetag: **18.12.87**

Int. Cl.⁴ **A47J 37/04**

Priorität: **19.12.86 CH 5073/86**

Veröffentlichungstag der Anmeldung:
**27.07.88 Patentblatt 88/30**

Benannte Vertragsstaaten:
**AT CH DE ES FR GB GR IT LI**

Anmelder: **HUBER, René**
**Kasthoferstrasse 50**
**CH-3006 Bern(CH)**

Erfinder: **HUBER, René**
**Kasthoferstrasse 50**
**CH-3006 Bern(CH)**

Vertreter: **Tschudi, Lorenz et al**
**Bovard AG Patentanwälte VSP**
**Optingenstrasse 16**
**CH-3000 Bern 25(CH)**

Mehrzweck-grilliergeraet.

Das Grilliergerät weist eine von einem Motor (7) angetriebene Hauptwelle (4) auf. Diese Welle (4) ist auf der Antriebsseite so ausgebildet, dass sie von einem Antriebszapfen (19) abgekuppelt und über ein auf der andern Geräteseite angeordnetes Kreuzgelenk (22) seitlich ausgeschwenkt werden kann. Die im gezeigten Ausführungsbeispiel als Grillkörbe (8) insbesondere für Fische ausgebildeten Grillgutträger werden über ein Planetengetriebe (1, 2) gegensinnig zur Hauptwelle (4) in Drehung versetzt. Die Grillkörbe (8) können durch Lösen von Schnappverschlüssen (23) an ihren geteilten Antriebszapfen (10) aus dem Gerät entfernt werden. Dadurch wird es möglich, auf die zu diesem Zwecke ausgeschwenkte Hauptwelle (4) irgendwelche andere Grillgutträger aufzustecken.

FIG. 1

EP 0 275 831 A1

## MEHRZWECK-GRILLIERGERAET

Die vorliegende Erfindung bezieht sich auf ein Mehrzweck-Grilliergerät.

Es sind bereits zahlreiche Grilliergeräte vorgeschlagen worden, die alle auf einen bestimmten Verwendungszweck zugeschnitten sind. Demgegenüber ist es Aufgabe der Erfindung, ein Grilliergerät zu schaffen, das sowohl bezüglich der Art des zu grillierenden Gutes, wie auch des Verwendungsortes beliebig einsetzbar ist.

Dies wird durch die kennzeichnenden Merkmale des Patentanspruches 1 erzielt.

Bevorzugte Ausführungsformen ergeben sich aus den abhängigen Patentansprüchen.

Durch die Auswechselbarkeit der Grillgutträger soll insbesondere ermöglicht werden, sowohl Fische und verschiedene Meeresfrüchte wie auch gewöhnliche Fleischstücke und am Spiess zu Bratendes, wie Poulets, Kaninchen und dergleichen, zubereiten zu können.

Ein Ausführungsbeispiel der Erfindung sowie dessen Verwendung wird anhand der Zeichnung näher erläutert, und zwar zeigt:

Fig 1 das ganze Grilliergerät mit eingesetzten Grillkörben,

Fig. 2 schematisch eine Stirnansicht des Antriebs,

Fig. 3 perspektivisch einen Teil eines Grillkorbes,

Fig. 4 den Endteil eines Grillspiesses,

Fig. 5 einen Gitterrost und

Fig. 6 ein Detail zu Fig. 1.

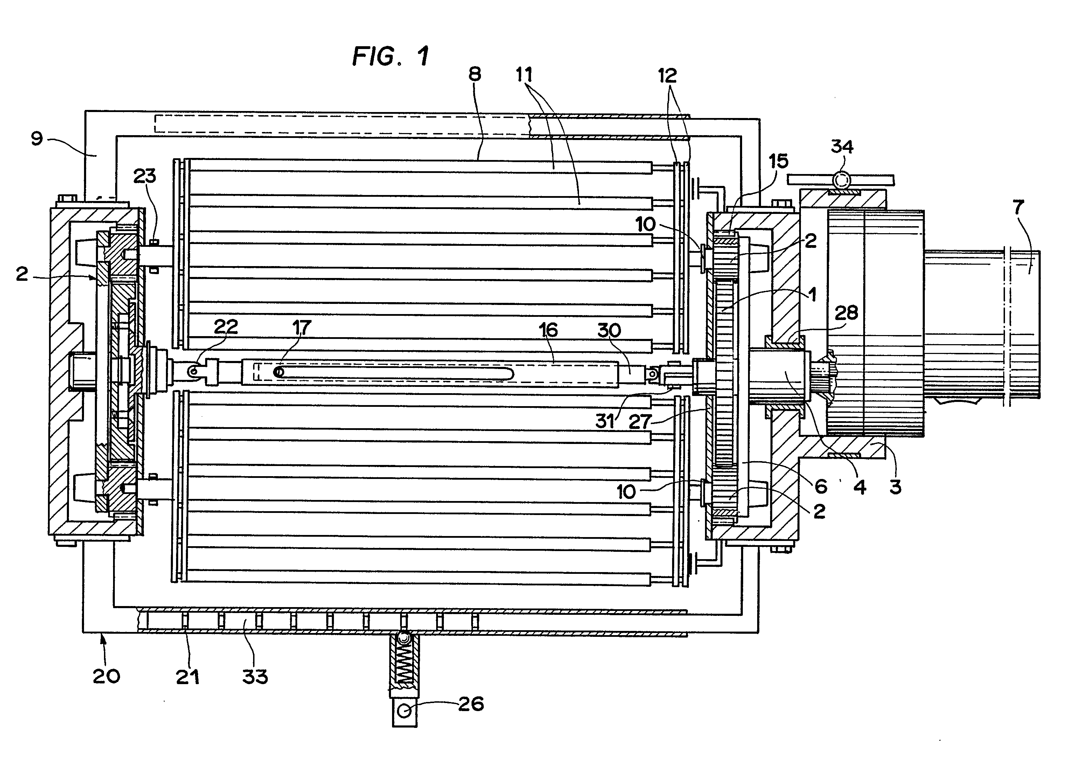

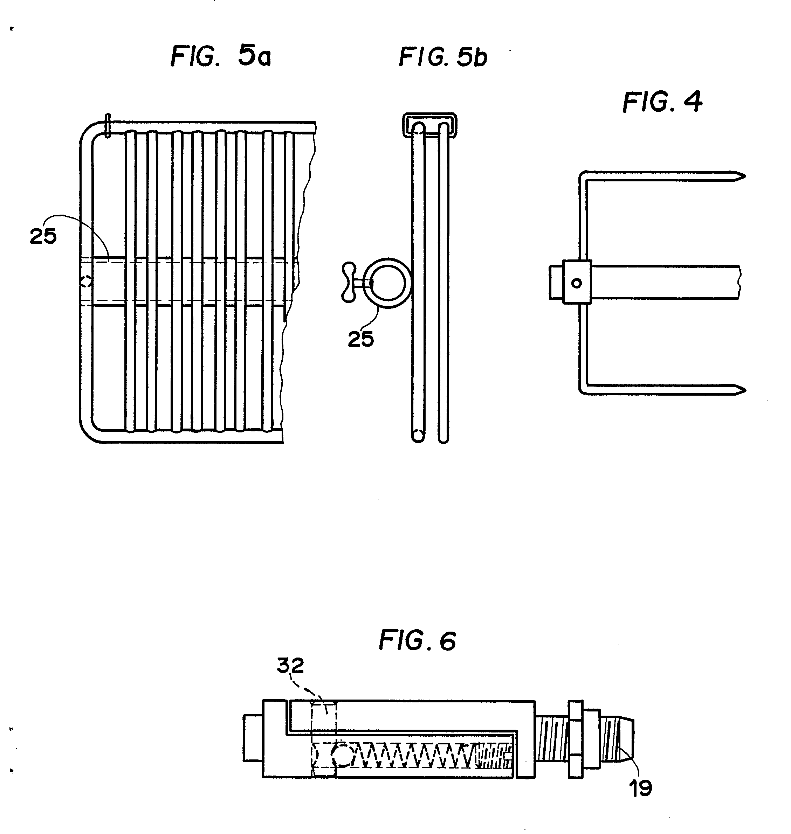

Das Grilliergerät nach Fig. 1 besitzt eine von einem Motor angetriebene Hauptwelle 4, welche in ihrer Länge veränderlich ist, da sie aus einer inneren Antriebswelle 16 und einer äusseren Antriebswelle 30 besteht, welche Antriebswellen teleskopartig ausziehbar sind. Der Auszug wird durch einen im Schlitz 18 der äusseren Antriebswelle 16 gleitenden, auf der inneren Antriebswelle 30 sitzenden Zapfen 17 begrenzt. Um die vielseitige Verwendungsmöglichkeit des Grilliergerätes zu ermöglichen, ist die Hauptwelle 4 seitlich ausschwenkbar. Dies wird durch die in Fig. 6 näher dargestellte Ausbildung des antriebsseitigen Wellenendes ermöglicht, wonach zwei halbzylinderförmige, mit dem angetriebenen Zapfen 19 bzw. dem Wellenende verbundene Glieder durch einen federbelasteten Rasterzapfen 32 miteinander lösbar verbunden sind. Am andern Ende der Hauptwelle 4 ist ein Kreuzgelenk 22 vorgesehen, um welches die ganze Hauptwelle herausschwenkbar ist, worauf Grillgutträger, wie sie in Fig. 4 und 5 dargestellt sind, aufgeschoben werden können.

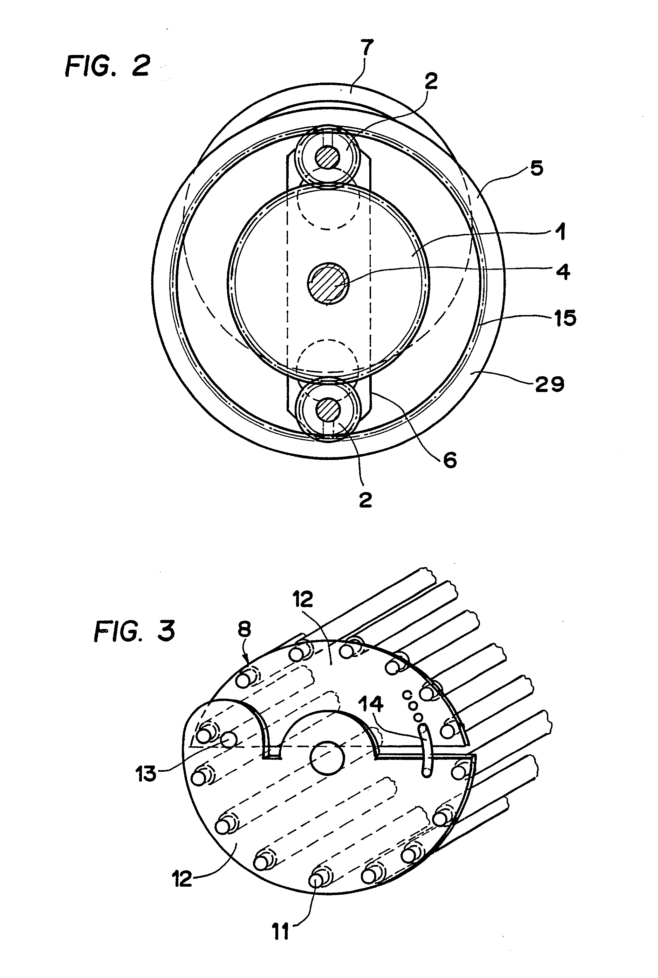

In dem in Fig. 1 dargestellten Fall ist das Grilliergerät mit zwei Gitterkörben 8 bestückt, die vorzugsweise zum Grillieren von Fischen dienen. Das Gehäuse 5, in dessen Flansch 3 der Motor 7 abnehmbar eingesteckt ist, besitzt eine vordere Abdeckung 27 und einen Lagersteg 6. Weiterhin ist eine Klemmvorrichtung 34 für den Motor 7 vorgesehen. Die beiden Grillkörbe 8, von denen einer in Fig. 3 in perspektivischer Ansicht teilweise dargestellt ist, sind beidseitig mittels Schnappverschlüssen 10 gelagert, welche auf der Antriebsseite in der Gehäuseabdeckung 27 gelagert sind. Zwischen dem Lagersteg 6 und der vorderen Abdeckung 27 ist ein Planetengetriebe angeordnet, dessen vom Motor 7 angetriebenes Sonnenrad 1 drehfest mit der Hauptwelle 4 verbunden ist, während die auf einer Innenverzahnung 15 (Fig. 2) abrollenden Planetenräder 1 über die Schnappverschlüsse 10 die beiden Grillkörbe 8 antreiben. Auf der dem Antrieb gegenüberliegenden Seite ist spiegelbildlich eine den Teilen 1, 2, 3, 5, 6, und 27 genau entsprechende Anordnung vorgesehen, wobei deren Planetengetriebe mit Sonnenrad 1 und Planetenrändern 2 von der Hauptwelle 4 angetrieben wird. Die letztgenannte Ausbildung gewährleistet eine sehr gute Führung der Grillkörbe und verhindert eine Verwindung der langgestreckten Körbe. Die beidseitigen Flansche 3 sind durch kräftige Bügel 20 miteinander verbunden. Jeder der Grillkörbe 8 besteht aus zwei Halbschalen, die durch zur Drehachse parallele, teleskopartig ausziehbare Gitterstäbe 11 gebildet sind. Da auch die Hauptwelle und die Bügel 20 teleskopartig ausziehbar sind, kann die axiale Länge des Gerätes der jeweiligen Länge des zu grillierenden Gutes angepasst werden. Durch eine in Nuten 21 des Innenrasterrohres 33 eines Verbindungsbügels 20 einrastende, unter Federdruck stehende Kugel wird die jeweils eingestellte Länge fixiert. Die beiden einen Grillkorb 8 bildenden Halbschalen sind gegeneinander verschwenkbar, um auch den Querschnitt des Grillkorbes variieren zu können. Um dies zu ermöglichen, sitzen die Enden der ausziehbaren Gitterstäbe 11 in je einem Endplattenpaar 12, wobei die Platten jedes Paares um exzentrisch gelegene Scharniere 13 gegeneinander verschwenkt werden können. In der jeweils eingestellten Lage werden die Halbschalen durch einen in ein Loch einer Lochreihe einrastbaren Schnappverschluss 14 fixiert.

Beim Grillieren eines Fisches z.B. wird zunächst durch teleskopartiges Ausziehen von Welle 4, Gitterstäben 11 und Bügel 20 die gewünschte Länge der Grillkörbe 8 eingestellt und hierauf der Fisch zwischen die aufgeklappten Halbschalen eingelegt, die in der Folge so weit zusammengeklappt werden, dass der Fisch eng umschlossen ist. Durch den Schnappverschluss 14 werden hierauf die Halbschalen in ihrer gegenseitigen Lage fixiert. Zum Abnehmen des fertig gegrillten Fisches wird der Korb geöffnet und der Fisch kann ohne Benützung von ihn eventuell verletzenden Hilfsgeräten auf einen Teller gekippt und somit sehr appetitlich serviert werden.

Die Schnappverschlüsse 10, welche die Grillkörbe 8 beidseitig mit den Planetenrädern 1 verbinden, sind unterteilt und können durch Verschiebung von Schnappverschlüssen 23 getrennt werden, so dass die Körbe vom Gerät abgenommen werden können, und das Gerät bereit ist für die Aufnahme anderer Grillgutträger, von welchen zwei Beispiele in den Fig. 4 und 5 gezeigt sind.

Wie bereits oben erwähnt, kann die Hauptwelle 4 vom Antriebszapfen 19 getrennt und um das Kreuzgelenk 22 am andern Ende ausgeschwenkt werden. Dadurch kann der in Fig. 4 gezeigte Drehspiess auf die Hauptwelle 4 aufgeschoben werden, wobei er durch teleskopartiges Ausziehen auf die gewünschte Länge einstellbar ist.

In gleicher Weise kann der in Fig. 5 in zwei Ansichten dargestellte Rost mit seinem Tragrohr 25 auf die Hauptwelle 4 aufgesteckt werden. Der Gitterrost besteht hier aus zwei gegeneinander verschwenkbaren Rostflächen 24, zwischen welchen ein zu grillierendes Fleischstück eingeklemmt werden kann. Zum Aufstellen des Grilliergerätes kann ein Trägerstab durch eine Halterung 26, an der die Rastkugel enthaltenden Ansatzstück am Verbindungsbügel 20 gesteckt werden. Dabei kann es sich um einen Trägerstab handeln, der bei Verwendung des Gerätes im Freien direkt in den Boden gesteckt wird oder um einen mit einem Traggestell verbundenen Stab, was das Aufstellen des Gerätes auf einem Balkon oder Gartenvorplatz gestattet.

## Ansprüche

1. Mehrzweck-Grilliergerät, dadurch gekennzeichnet, dass mehrere Grillgutträger vorgesehen sind, die auswechselbar in eine Trägeranordnung einsetzbar sind und mit einer Antriebseinheit (1, 2, 7) an dieser Anordnung, um den jeweils eingesetzten Grillgutträger in Drehung zu versetzen.

2. Grilliergerät nach Patentanspruch 1, dadurch gekennzeichnet, dass die Grillgutträger in mindestens einer ihrer Abmessungen veränderbar sind, um sie der Grösse des jeweiligen Grillgutes anpassen zu können.

3. Grilliergerät nach Patentanspruch 1 oder 2, insbesondere zum Grillieren von Fischen, dadurch gekennzeichnet, dass einer der Grillgutträger ein Paar von Grillkörben (8) aufweist, die vom Antrieb einerseits um ihre eigenen Achsen und andererseits als Ganzes um eine zu diesen Achsen parallele GeräteHauptwelle (4) gedreht werden.

4. Grilliergerät nach Patentanspruch 3, dadurch gekennzeichnet, dass jeder Grillkorb (8) aus zwei halbzylinderförmigen, zwecks Veränderung des Korbquerschnittes gegeneinander verschwenkbaren Schalengebilden besteht, deren Mäntel durch zur Drehachse parallele, teleskopartig ausziehbare Gitterstäbe (11) gebildet sind.

5. Grilliergerät nach Patentanspruch 2, dadurch gekennzeichnet, dass einer der Grillgutträger als teleskopartig ausziehbarer Bratspiess ausgebildet ist (Fig. 4).

6. Grilliergerät nach Patentanspruch 1, dadurch gekennzeichnet, dass einer der Grillgutträger ein Rost ist, der aus zwei scharnierartig zusammenklappbaren Rostflächen (24) besteht, um zwischen diesen ein flächiges Grillgut einklemmen zu können (Fig. 5).

7. Grilliergerät nach einem der vorangehenden Patentansprüche, dadurch gekennzeichnet, dass der Antrieb von einem vorzugsweise batteriegespeisten Motor (7) über ein Planetengetriebe (1, 2) erfolgt.

8. Grilliergerät nach einem der vorangehenden Patentansprüche, dadurch gekennzeichnet, dass eine von einem Motor angetriebene Hauptwelle (4) ausschwenkbar oder abnehmbar ausgebildet ist, um die Grillgutträger auswechseln zu können.

FIG. 1

0 275 831

FIG. 2

FIG. 3

# FIG. 5a

# FIG. 5b

# FIG. 4

25

25

# FIG. 6

32

19

Europäisches
Patentamt

**EUROPÄISCHER RECHERCHENBERICHT**

Nummer der Anmeldung

EP 87 81 0762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 504 620 (GERHARDT) <br> * Spalte 2, Zeilen 9-17; Figuren 3-5 * | 1-3. | A 47 J 37/04 |
| X | BE-A- 387 593 (BROMHAM) <br> * Insgesamt * | 1,3,4,6 | |
| X | US-A-1 786 300 (HARRISON) <br> * Insgesamt * | 1,7 | |
| X | GB-A- 908 646 (THE GAS COUNCIL) <br> * Insgesamt * | 1,8 | |
| X | US-A-2 618 730 (PANKEN) <br> * Figuren 9,10 * | 1,7 | |
| A | FR-A-1 424 773 (TUBESSOR S.A.) <br> * Seite 2, Spalte 1, Zeile 43 - Spalte 2, Zeile 4 * | 5 | |
| A | US-A-3 194 149 (SCHIBLEY) <br> * Figuren 2,4 * | 8 | |
| A | US-A-3 812 776 (KEAN) <br> * Insgesamt * | 4 | RECHERCHIERTE SACHGEBIETE (Int. Cl.4) <br><br> A 47 J |
| A | GB-A- 383 409 (JOHNSTON) <br> * Insgesamt * | 4 | |
| A | DE-A-1 579 467 (ROENSCH) <br> * Insgesamt * | 1,6 | |

Der vorliegende Recherchenbericht wurde für alle Patentansprüche erstellt

| Recherchenort | Abschlußdatum der Recherche | Prüfer |
|---|---|---|
| DEN HAAG | 09-03-1988 | SCHARTZ J. |